(19) Europäisches Patentamt

European Patent Office

Office européen des brevets

(11) **EP 0 945 966 B1**

(12) **FASCICULE DE BREVET EUROPEEN**

(45) Date de publication et mention de la délivrance du brevet:
**10.08.2005 Bulletin 2005/32**

(51) Int Cl.⁷: **H02K 29/03**

(21) Numéro de dépôt: **99810212.3**

(22) Date de dépôt: **10.03.1999**

(54) **Moteur électrique**

Elektromotor

Electric motor

(84) Etats contractants désignés:
**CH DE ES FR GB IT LI NL**

(30) Priorité: **27.03.1998 CH 074598**

(43) Date de publication de la demande:
**29.09.1999 Bulletin 1999/39**

(73) Titulaire: **ISA Innovations SA**
**1700 Fribourg (CH)**

(72) Inventeur: **Benito Izquierdo, José Antonio**
**08034 Barcelona (ES)**

(74) Mandataire: **Kiliaridis, Constantin et al**
**Bugnion S.A.,**
**10, Route de Florissant,**
**Case Postale 375**
**1211 Genève 12 (CH)**

(56) Documents cités:
**DE-A- 3 401 163      DE-A- 4 124 425**
**FR-A- 2 645 364      US-A- 4 769 567**
**US-A- 5 396 137**

- **PATENT ABSTRACTS OF JAPAN vol. 018, no. 434 (E-1592), 12 août 1994 (1994-08-12) & JP 06 133516 A (JAPAN SERVO CO LTD), 13 mai 1994 (1994-05-13)**
- **PATENT ABSTRACTS OF JAPAN vol. 017, no. 521 (E-1435), 20 septembre 1993 (1993-09-20) & JP 05 137304 A (FANUC LTD), 1 juin 1993 (1993-06-01)**

EP 0 945 966 B1

## Description

L'invention se rapporte à un moteur électrique comprenant un stator et un rotor, l'une des deux parties étant un induit à encoches, dont le nombre est égal à R, l'autre partie comportant un nombre 2P de pôles magnétiques.

Dans les moteurs électriques, l'avantage des encoches, sur le plan magnétique, est que les trajets du champ magnétique à travers l'air sont réduits parce qu'ils peuvent entrer à partir des pièces polaires à travers un entrefer relativement petit directement dans les dents de l'induit et, sur le plan mécanique, que les enroulements placés dans les encoches sont empêchés de se déplacer latéralement grâce aux flancs des dents limitant les encoches.

Cependant, les induits à encoches présentent un inconvénient appelé l'effet de dents (« cogging torque ») provoqué par l'interaction des aimants avec les encoches de l'induit.

Cet effet de dents et une solution pour le modérer ont été décrits, par exemple, dans l'article de Messieurs Ackermann, Janssen, Sottek et van Steen publié dans IEE PROCEEDINGS-B Vol. 139, No 4 July 1992, pages 315 à 320, et intitulé « New technique for reducing cogging torque in a class of brushless DC motors ». Dans cet article, les mesures proposées pour diminuer l'effet de dents pour les moteurs à aimants permanents et sans balai, si le nombre de pôles magnétiques est assez proche du nombre d'encoches d'induit, consistent à ajuster judicieusement la largeur des pôles ou la largeur des encoches.

Une autre solution pour réduire l'effet de dents est décrite dans le brevet US-A-5396137 (SHINTO MASAYUKI ET AL) 7 mars 1995, qui décrit un moteur avec un stator à n encoches et un rotor comprenant un nombre 2P de pôles. La surface de la face polaire des (2P-1) pôles est égale à $\ominus_s$ = 360°/2P - 360°/2Pn, tandis que la surface de la face polaire restante est égale à $\ominus_L$ = 360°-(2P-1)$\ominus_S$.

Encore une autre solution est décrite dans le brevet US-A-4769567 (TUNEYA KURAUCHI ET AL) 6 septembre 1988, qui décrit une machine électrique avec des pôles magnétiques identiques distribués non uniformément sur le rotor.

Pour diminuer cet effet désavantageux, il est également connu, pour les moteurs à rotor long et entrefer radial, d'avoir sur l'arbre du moteur plusieurs aimants juxtaposés axialement, mais légèrement décalés les uns par rapport aux autres dans le sens périphérique.

L'invention a pour but de proposer une autre mesure pour moduler la variation du flux magnétique en fonction de l'angle de rotation, tel que les fluctuations causées par la présence des encoches sont minimisées.

A cet effet, le moteur électrique selon l'invention comme décrit dans le préambule de la revendication 1, est caractérisé en ce que parmi les 2P intervalles angulaires entre les centres des faces polaires de deux pôles magnétiques voisins, (2P-1) intervalles sont égaux chacun soit à

$$a_1 = (360°/2P) - b \qquad (1)$$

soit à

$$a_2 = (360°/2P) + b \qquad (2)$$

où la distance angulaire b a la valeur :

$$b = 360°/(2PR) \qquad (3),$$

R étant le nombre d'encoches.

Donc, au lieu de positionner les pôles magnétiques de la manière habituelle avec une distribution régulière avec tous les intervalles égaux, à savoir avec des pas polaires égaux à 360°/2P, on diminue (2P-1) intervalles de l'angle constant b ou alternativement on les augmente de cet angle constant b, de telle manière que l'intervalle restant est, soit en appliquant la formule (1) :

$$c_1 = 360° - (2P-1).a_1 \qquad (4),$$

soit en appliquant la formule (2) :

$$c_2 = 360° - (2P-1).a_2 \qquad (5)$$

Cet intervalle restant est donc soit plus grand, soit plus petit que les autres. Dans le cas d'un moteur selon la formule (2), il faut bien entendu concevoir le moteur de telle manière que l'intervalle restant $c_2$ laisse suffisamment de place pour que les deux pôles magnétiques qui limitent cet intervalle $c_2$ puissent être placés d'une manière satisfaisante.

La solution proposée par la présente invention permet de diminuer les fluctuations du flux magnétique en fonction de l'angle de rotation parce que l'on évite ainsi que tous les pôles magnétiques passent simultanément devant les encoches.

L'invention sera décrite à l'aide de plusieurs formes d'exécution.

Les figures 1 à 4 se réfèrent au cas d'un moteur à entrefer radial avec un rotor à aimants permanents et illustrent schématiquement quatre exemples de rotors selon l'invention, le stator qui forme l'induit étant montré seulement partiellement sur la figure 1.

La figure 5 est une vue schématique d'un rotor plat avec entrefer axial.

La figure 6 est une vue schématique d'une variante d'exécution d'un rotor dont les pôles sont constitués par des électroaimants.

La figure 7 est une vue schématique d'une autre variante d'exécution avec un rotor à encoches entouré d'un stator muni des aimants permanents.

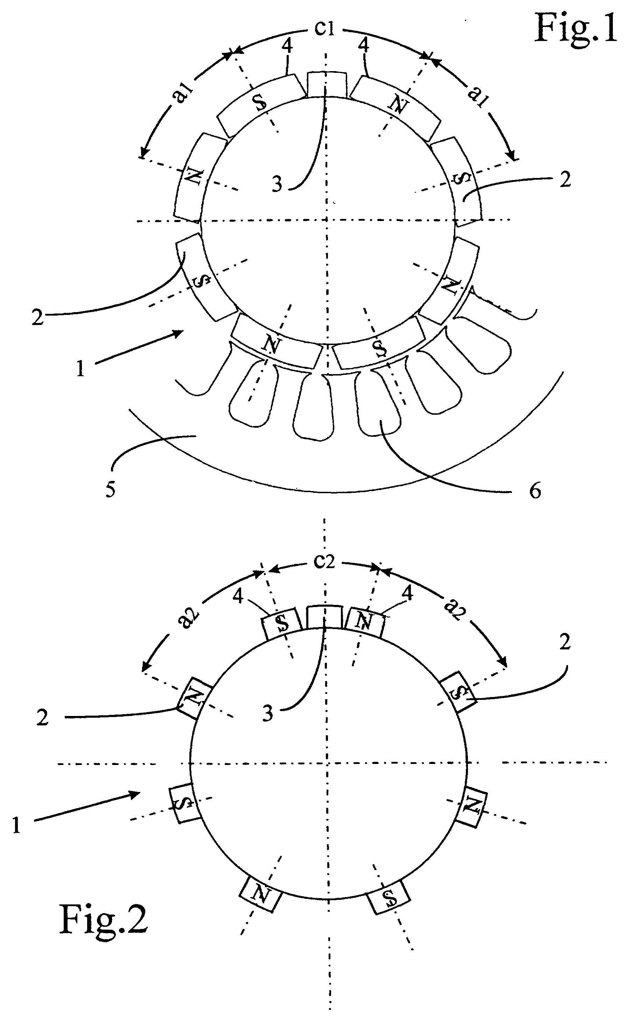

En se référant à la figure 1, le rotor 1 comporte huit aimants permanents 2 dont les faces extérieures formant la périphérie du rotor sont les faces polaires 4 désignées par N, S. Donc le nombre de pôles est 2P=8. Le nombre d'encoches 6 du stator 5 représenté partiellement et sans bobine, est R=24 et l'angle b selon la formule (3) est b=1,875°. Parmi les 2P intervalles angulaires entre les centres des faces polaires 4 de deux pôles magnétiques voisins, (2P-1) intervalles ont, selon la formule (1) la valeur $a_1$=43,125°. L'intervalle restant est donné en appliquant la formule (4), à savoir, $c_1$ = 58,125°. Donc cet intervalle $c_1$ est plus grand que l'intervalle $a_1$ et comporte dans sa partie médiane une zone neutre qui est remplie par un contrepoids 3.

Selon l'exemple illustré à la figure 2, on a les mêmes données que précédemment, à savoir huit aimants 2 avec les faces polaires 4, donc nombre de pôles 2P=8, nombre d'encoches R=24 et l'angle b=1,875°, mais ce rotor est conçu en appliquant la formule (2). On a donc (2P-1) intervalles $a_2$ dont la valeur est $a_2$=46,25°, et l'intervalle restant $c_2$ selon la formule (5) est $c_2$=31,875°. Dans ce cas, l'intervalle restant $c_2$ déterminant la zone neutre est donc plus petit. Dans l'exemple considéré selon la figure 2, le rapport R/2P est égal à 3. En général, ce rapport peut avoir une valeur de 2 à 4.

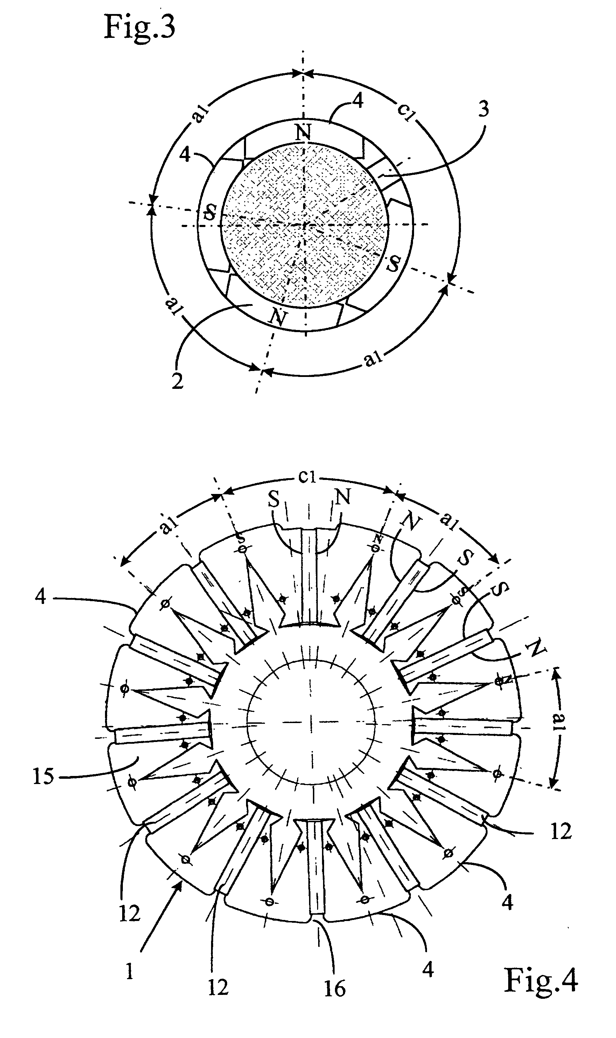

Selon l'exemple illustré figure 3, le rotor a quatre aimants 2, donc quatre faces polaires 4 désignées par N, S ; le nombre de pôles est 2P=4 et le nombre d'encoches du stator est R=12, l'angle b étant égal à 7,5°. Ce rotor est conçu selon la formule (1), on a $a_1$=82,5° et l'intervalle restant $c_1$= 112,5°, représentant la zone neutre qui est remplie par un contrepoids 3.

Si ce rotor était conçu selon la formule (2), on obtiendrait un intervalle $a_2$ = 97,5° et l'intervalle restant $c_2$ = 67,5°. Le rapport R/2P est égal à 3.

Enfin, selon l'exemple illustré figure 4, le rotor 1 est constitué de paquets de tôles magnétiques superposées découpées radialement pour former des dents 15 constituant des pièces polaires et délimitant des fentes 16 entre lesquelles sont insérés des aimants plats 12 en forme de plaque mince avec des pôles plats parallèles opposés N, S, de telle manière que la surface de ces pôles plats est orientée dans des plans parallèles à l'axe du rotor, autrement dit approximativement dans des plans axiaux. L'axe magnétique de ces aimants 12 s'étend donc dans le sens périphérique du rotor. Ces aimants 12 sont disposés tels que les faces latérales d'une dent 15 qui s'étendent dans le plan axial, donc parallèlement à l'axe du rotor se trouvent en contact avec des pôles de la même polarité de deux aimants 12 successifs, comme montré figure 4 pour quelques aimants et quelques dents. Le flux magnétique des aimants 12 traverse les dents 15 et leurs faces frontales périphériques qui constituent les faces polaires 4 du rotor.

Dans cette construction, la surface d'une face polaire 4 d'une dent 15 du rotor est inférieure à deux fois la surface d'un pôle plat d'un des aimants 12. Cette disposition présente l'avantage que le flux magnétique est concentré dans les dents 15 et il y a donc un flux concentré qui traverse les faces polaires 4 du rotor.

Dans cet exemple, le rotor 1 présente douze faces polaires 4 séparées par douze aimants 2. On a donc 2P = 12 et l'on choisit un stator ayant 32 encoches, donc R=32. En appliquant la formule (3), on a b = 0°56' et avec la formule (1), l'angle $a_1$ = 29°4'. Dans ce cas , selon la formule (4), l'intervalle restant est $c_1$ = 40°16'.

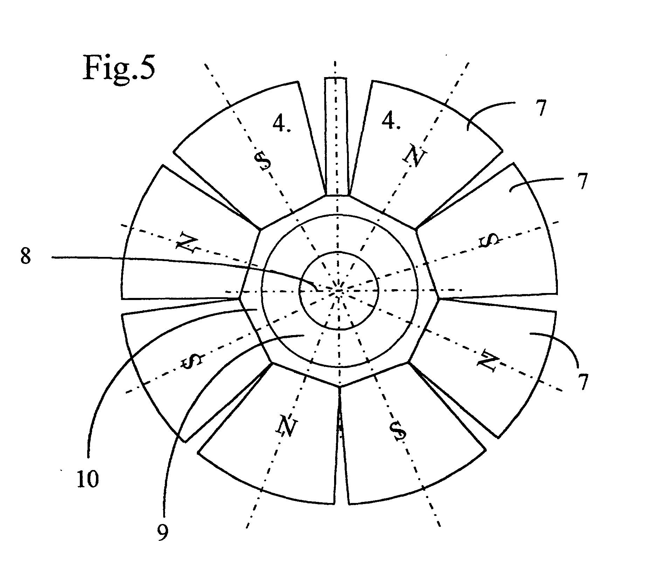

Sur la figure 5, on a représenté l'exemple d'un rotor plat à huit pôles 7, donc un moteur avec entrefer axial, les faces polaires N, S étant dans des plans radiaux perpendiculaires à l'axe du rotor. Ce rotor est monté sur l'arbre 8 par l'intermédiaire d'un support 10 en matériau non magnétique lui-même monté sur une douille 9. Dans l'intervalle restant entre les pôles est montée une pièce en tôle magnétique 3. Les autres caractéristiques du rotor sont les mêmes que celles données en relation avec la figure 1. Le stator se trouve à côté du rotor et délimite un entrefer axial. On peut également avoir deux stators disposés de part et d'autre du rotor.

En pratique, pour développer un moteur selon l'invention, on choisit en premier lieu les valeurs du nombre de pôles magnétiques 2P et le nombre d'encoches R de l'induit à encoches et, avec ces valeurs, on calcule selon la formule (3) l'angle b et ensuite, selon la formule (1) ou (2), l'intervalle angulaire $a_1$, respectivement $a_2$.

En variante, le moteur selon l'invention peut avoir des électroaimants à la place des aimants permanents, comme illustré figure 6. Selon cet exemple, le rotor 21 comporte six pôles électromagnétiques 22 excités par des bobines 23, donc 2P = 6. Comme dans les exemples précédents, la valeur des (2P-1) intervalles entre les centres des pôles électromagnétiques est représentée par l'angle $a_1$ et l'intervalle restant est représenté par l'angle $c_1$.

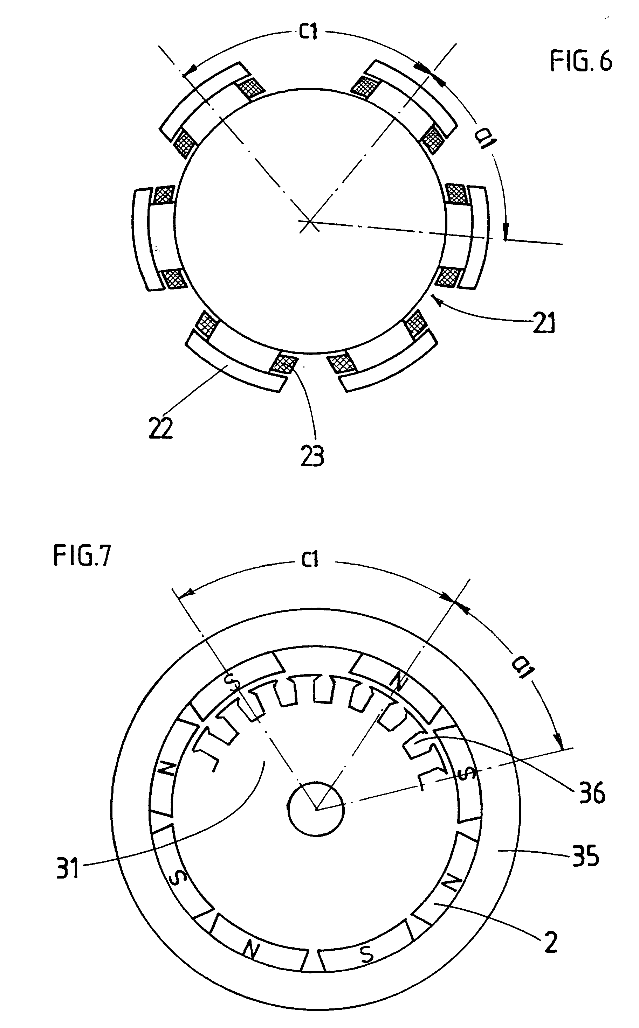

Selon une autre variante, la partie portant les aimants constitue le stator et l'induit à encoches constitue le rotor, comme illustré figure 7. Dans ce cas, huit aimants permanents 2 sont montés sur le stator 35, donc 2P = 8, tandis que le rotor 31, illustré partiellement, est muni d'encoches 36 dans lesquelles sont montées les bobines non représentées. La valeur des (2P-1) intervalles entre les aimants permanents est toujours représentée par l'angle $a_1$ et l'intervalle restant par l'angle

$c_1$.

## Revendications

1. Moteur électrique comprenant un stator et un rotor, l'une des deux parties étant un induit à encoches (6), dont le nombre est égal à R, l'autre partie comportant un nombre 2P de pôles magnétiques (2), les 2P pôles magnétiques possédant une surface identique de face polaire (4), **caractérisé en ce que** parmi les 2P intervalles angulaires ($a_1, a_2, c_1, c_2$) entre les centres des faces polaires de deux pôles magnétiques (2) voisins, (2P-1) intervalles sont égaux chacun soit à a1 = (360° /2P) - b, soit à a2 = (360° /2P) + b, la distance angulaire b étant égale à 360° /(2PR) et **en ce que** les (2P-1) intervalles précédents définissent respectivement un intervalle restant soit égal à c1 = 360° - (2P-1).a1, soit égal à c2 = 360° - (2P-1).a2, cet intervalle restant délimitant une zone neutre remplie par un contrepoids (3).

2. Moteur selon la revendication 1 ayant un rotor à aimants permanents **caractérisé par le fait que** le rotor est constitué de paquets de tôles magnétiques superposées découpées radialement pour former des dents (15) constituant des pièces polaires dont les faces périphériques forment les faces polaires (4) du rotor et délimitant des fentes (16) entre lesquelles sont insérés des aimants plats (12) en forme de plaque mince avec des pôles plats opposés (N, S), de telle manière que la surface de ces pôles plats est orientée dans des plans parallèles à l'axe du rotor, ces aimants 12 étant disposés tels que les faces latérales d'une dent (15) qui s'étendent dans le plan axial se trouvent en contact avec des pôles de la même polarité de deux aimants successifs et que la surface d'une face polaire (4) d'une dent (15) du rotor est inférieure à deux fois la surface d'un pôle plat d'un des aimants (12).

## Patentansprüche

1. Elektromotor mit einem Stator und einem Rotor, wobei das eine Bauteil ein Nutanker (6) mit R Nuten ist und das andere Bauteil 2P Magnetpole (2) aufweist, und wobei die 2P Magnetpole jeweils identische Polflächen (4) besitzen, **dadurch gekennzeichnet, dass** von den 2P Winkelintervallen (a1, a2, c1, c2) zwischen den Mittelpunkten der Polflächen zweier benachbarter Magnetpole (2) jeweils (2P-1) Intervalle entweder gleich a1 = (360°/2P) - b oder gleich a2 = (360°/2P) + b sind, wobei der Winkelabstand b gleich 360°/(2PR) ist, und dass die vorhergehenden (2P-1) Intervalle jeweils ein Restintervall definieren, das entweder gleich c1 = 360° - (2P-1)al oder gleich c2 = 360° - (2P-1)a2 ist und einen neutralen Bereich begrenzt, der von einem Gegengewicht (3) besetzt ist.

2. Motor nach Anspruch 1, mit einem Rotor mit Permanentmagneten, **dadurch gekennzeichnet, dass** der Rotor aus Paketen übereinander liegender Magnetbleche aufgebaut ist, welche radial unter Bildung von Zähnen (15) ausgeschnitten sind, welche die Magnete bilden, deren Umfangsflächen die Polflächen (4) des Rotors bilden und Schlitze (16) begrenzen, in welche flache Magnete (12) in Form dünner Platten mit flachen, einander gegenüberliegenden Polen (N, S) eingesetzt sind, derart, dass die Oberfläche dieser flachen Pole in Ebenen parallel zur Rotorachse ausgerichtet sind, wobei diese Magnete (12) derart angeordnet sind, dass die Seitenflächen eines Zahns (15), die sich in der Axialebene erstrecken, in Berührung mit Polen der gleichen Polarität zweier aufeinander folgender Magnete befinden, und dass die Flächengrösse einer Polfläche (4) eines Zahns (15) des Rotors kleiner ist als das Doppelte der Fläche eines flachen Poles eines der Magnete (12).

## Claims

1. An electric motor comprising a stator and a rotor, one of which being a slotted armature (6), in which the number of slots is equal to R, the other of which comprising a number 2P of magnetic poles (2), the 2P magnetic poles having an identical surface of polar face (4), **characterized in that** among the 2P angular gaps (a1,a2,c1,c2) between the centers of the polar faces of two adjacent magnetic poles (2), (2P-1) gaps are each equal either to $a_1$ = (360°/2P) - b, or to $a_2$ = (360°/2P) + b, the angular distance b being equal to 360°/(2PR) and **in that** the (2P-1) preceding gaps each define un remaining gap either equal to c1 = 360°-(12P-1).al, or equal to c2 = 360° - (2P-1).a2, this remaining gap delimiting a neutral zone filled by a counterweight (3).

2. Motor as defined in claim 1 having a rotor with a permanent magnet rotor, **characterized by** the fact that the rotor is made of bundle of superimposed magnetic sheets cut radially to form cogs (15) constituting pole pieces, the peripheral faces of which form the polar faces (4) of the rotor and delimiting slots (16) between which flat magnets (12) in the shape of thin plates with opposed flat poles (N,S) are inserted in such a way that the surfaces of these flat poles are in planes parallel to the axis of the rotor, these magnets 12 being arranged in such a way that the lateral faces of a cog (15) which extend in the axial plane are in contact with poles of the same polarity of two successive magnets and that the surface area of a polar face (4) of a cog (15) of the rotor

**EP 0 945 966 B1**

is less than twice the surface area of a flat pole of one of the magnets (12).

Fig.1

Fig.2

# Fig.3

# Fig.4

Fig.5

FIG. 6

FIG.7